(19) Europäisches Patentamt
European Patent Office
Office européen des brevets

(11) EP 3 558 700 B1

(12) # FASCICULE DE BREVET EUROPEEN

(45) Date de publication et mention de la délivrance du brevet:
**18.11.2020 Bulletin 2020/47**

(21) Numéro de dépôt: **17822370.7**

(22) Date de dépôt: **05.12.2017**

(51) Int Cl.:
***B60C 1/00*** (2006.01) ***C08L 9/00*** (2006.01)
***C08L 9/06*** (2006.01)

(86) Numéro de dépôt international:
**PCT/FR2017/053396**

(87) Numéro de publication internationale:
**WO 2018/115621 (28.06.2018 Gazette 2018/26)**

(54) **COMPOSITION DE CAOUTCHOUC COMPRENANT UNE RESINE HYDROCARBONEE SPECIFIQUE**

KAUTSCHUKZUSAMMENSETZUNG MIT EINEM SPEZIELLEN KOHLENWASSERSTOFFHARZ

RUBBER COMPOSITION COMPRISING A SPECIFIC HYDROCARBON RESIN

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.12.2016 FR 1663104**

(43) Date de publication de la demande:
**30.10.2019 Bulletin 2019/44**

(73) Titulaire: **Compagnie Générale des Etablissements Michelin**
**63000 Clermont-Ferrand (FR)**

(72) Inventeurs:
- **DE GAUDEMARIS, Benoit**
**63040 Clermont-Ferrand Cedex 9 (FR)**
- **HUT, Alain**
**63040 Clermont-Ferrand Cedex 9 (FR)**

(74) Mandataire: **Sidhu, Alban**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**EP-A1- 2 799 480** **EP-A1- 2 974 884**
**WO-A1-2016/109476**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 558 700 B1

Printed by Jouve, 75001 PARIS (FR)

## Description

L'invention est relative aux compositions, notamment pour pneumatiques et plus particulièrement aux compositions comprenant une résine hydrocarbonée spécifique pour améliorer les propriétés des compositions en association avec les élastomères de très basse température de transition vitreuse (Tg).

Il est connu du document WO 2016/109476 que des résines terpène-phénol peuvent présenter un intérêt pour les propriétés de freinage.

Il est également connu dans l'état de l'art que les élastomères de basse Tg permettent une amélioration de la performance en abrasion (WO 2015/043902).

A présent, les Demanderesses ont montré qu'une composition particulière comprenant une résine hydrocarbonée spécifique permet d'obtenir des compositions présentant une amélioration des performances de cohésion, d'adhérence, de résistance au roulement et de processabilité.

L'invention concerne donc une composition de caoutchouc à base d'au moins :

- de 50 à 100 pce d'un ou plusieurs élastomères diéniques dits de très basse température de transition vitreuse (Tg) présentant une Tg comprise dans un domaine allant de -110°C à -70°C, choisis parmi les homopolymères de butadiène, les copolymères de butadiène et de monomère vinylaromatique, présentant un taux d'unité vinylaromatique compris entre 0 et 5% en poids, et les mélanges de ces derniers,
- une charge renforçante,
- un système de réticulation,
- de 50 à 150 pce d'au moins une résine hydrocarbonée majoritairement composée d'unités issues de monomères terpènes et phénols, la résine présentant un taux de proton aromatique supérieur à 15%.

L'invention concerne également un pneumatique comprenant une composition telle que définie ci-dessus et telle que définie préférentiellement ci-après ; de préférence dans tout ou partie de sa bande de roulement. Préférentiellement, le pneumatique selon l'invention sera choisi parmi les pneumatiques destinés à équiper un véhicule à deux roues, un véhicule de tourisme, ou encore un véhicule dit « poids lourd » (c'est-à-dire métro, bus, véhicules hors-la-route, engins de transport routier tels que camions, tracteurs, remorques), ou encore des avions, des engins de génie civil, agraire, ou de manutention.

### I- Constituants de la composition

Les compositions de caoutchouc selon l'invention sont à base d'au moins : de 50 à 100 pce d'un ou plusieurs élastomères diéniques dits de très basse température de transition vitreuse (Tg) présentant une Tg comprise dans un domaine allant de - 110°C à -70°C, choisis parmi les homopolymères de butadiène, les copolymères de butadiène et de monomère vinylaromatique, présentant un taux d'unité vinylaromatique compris entre 0 et 5% en poids, et les mélanges de ces derniers, une charge renforçante, un système de réticulation et de 50 à 150 pce d'au moins une résine hydrocarbonée majoritairement composée d'unités issues de monomères terpènes et phénols, la résine présentant un taux de proton aromatique supérieur à 15%.

Par l'expression «composition à base de» il faut entendre une composition comportant le mélange et/ou le produit de réaction in situ des différents constituants de base utilisés, certains de ces constituants pouvant réagir et/ou étant destinés à réagir entre eux, au moins partiellement, lors des différentes phases de fabrication de la composition, ou lors de la cuisson ultérieure, modifiant la composition telle qu'elle est préparée au départ. Ainsi les compositions telles que mises en œuvre pour l'invention peuvent être différentes à l'état non réticulé et à l'état réticulé.

Dans la présente description, sauf indication expresse différente, tous les pourcentages (%) indiqués sont des pourcentages en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Lorsqu'on fait référence à un composé « majoritaire », on entend au sens de la présente invention, que ce composé est majoritaire parmi les composés du même type dans la composition, c'est-à-dire que c'est celui qui représente la plus grande quantité en masse parmi les composés du même type. Ainsi, par exemple, un polymère majoritaire est le polymère représentant la plus grande masse par rapport à la masse totale des polymères dans la composition. De la même manière, une charge dite majoritaire est celle représentant la plus grande masse parmi les charges de la composition. A titre d'exemple, dans un système comprenant un seul polymère, celui-ci est majoritaire au sens de la présente invention ; et dans un système comprenant deux polymères, le polymère majoritaire représente plus de la moitié de la masse des polymères. Au contraire, un composé « minoritaire » est un composé qui ne représente pas la fraction massique la plus grande parmi les composés du même type.

Lorsqu'on fait référence à une unité (ou monomère) « majoritaire » au sein d'un même composé (ou polymère), on entend au sens de la présente invention, que cette unité (ou monomère) est majoritaire parmi les unités (ou monomères) formant le composé (ou polymère), c'est-à-dire que c'est celle qui représente la plus grande fraction, en masse parmi les unités (ou monomères) formant le composé (ou polymère). Ainsi, par exemple, une résine majoritairement composée d'unités issues de monomères terpènes et phénols est une résine dans laquelle les unités terpènes et phénols ensemble représentent la plus grande quantité en masse, parmi toutes les unités composant ladite résine. Dit autrement, un monomère « majoritaire » ou un ensemble de monomères « majoritaires », est un monomère (ou un ensemble de monomères) qui représente la fraction massique la plus grande dans le polymère. Au contraire, un monomère « minoritaire » est un monomère qui ne représente pas la fraction molaire la plus grande dans le polymère.
Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

1-1 Elastomère diénique

La composition selon l'invention peut contenir un seul élastomère diénique ou un mélange de plusieurs élastomères diéniques.
Par élastomère (ou « caoutchouc », les deux termes étant considérés comme synonymes) du type "diénique", on rappelle ici que doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non).
Les élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles); c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.
Ces définitions étant données, et comme bien connu de l'homme de l'art, on entend plus particulièrement par élastomère diénique:

(a) tout homopolymère obtenu par polymérisation d'un monomère diène conjugué ayant de 4 à 12 atomes de carbone;

(b) tout copolymère obtenu par copolymérisation d'un ou plusieurs diènes conjugués entre eux ou avec un ou plusieurs composés vinyle aromatique ayant de 8 à 20 atomes de carbone;

(c) un copolymère ternaire obtenu par copolymérisation d'éthylène, d'une $\alpha$-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;

(d) un copolymère d'isobutène et d'isoprène (caoutchouc butyle), ainsi que les versions halogénées, en particulier chlorées ou bromées, de ce type de copolymère.

Pour les besoins de l'invention, la composition comprend, à un taux compris dans un domaine allant de 50 à 100 pce, un ou plusieurs élastomères diéniques dits de très basse Tg, c'est à dire présentant une Tg comprise dans un domaine allant de - 110°C à -70°C, ces derniers étant choisis parmi les homopolymères de butadiène, les copolymères de butadiène et de monomère vinylaromatique, présentant un taux d'unité vinylaromatique compris entre 0 et 5% en poids, et les mélanges de ces derniers. Ainsi, les copolymères de butadiène et de monomère vinylaromatique peuvent contenir de 95 à moins de 100% en poids d'unités diéniques et de plus de 0 à 5% en poids d'unités vinylaromatiques.
A titre de composés vinylaromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.
Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés,

et être préparés en dispersion ou en solution. Dans le cas d'un copolymère à base d'un diène et d'un vinyl aromatique, notamment contenant du butadiène et du styrène, préférentiellement les deux monomères sont répartis statistiquement.

Ledit élastomère diénique de très basse Tg peut être couplé et/ou étoilé ou fonctionnalisé par un groupement introduit via un agent de couplage et/ou d'étoilage ou de fonctionnalisation connu de l'homme de l'art. Ce groupement peut se situer en bout de chaîne élastomère principale linéaire. On dira alors que l'élastomère diénique est fonctionnalisé en bout ou en extrémité de chaîne. C'est généralement un élastomère obtenu par réaction d'un élastomère vivant sur un agent de fonctionnalisation, c'est à dire toute molécule au moins monofonctionnelle, la fonction étant tout type de groupement chimique connu par l'homme de l'art pour réagir avec un bout de chaîne vivant.

Ce groupement peut se situer dans la chaîne élastomère principale linéaire. On dira alors que l'élastomère diénique est couplé ou encore fonctionnalisé en milieu de chaîne, par opposition à la position "en bout de chaîne" et bien que le groupement ne se situe pas précisément au milieu de la chaîne élastomère. C'est généralement un élastomère obtenu par réaction de deux chaines de l'élastomère vivant sur un agent de couplage, c'est à dire toute molécule au moins difonctionnelle, la fonction étant tout type de groupement chimique connu par l'homme de l'art pour réagir avec un bout de chaîne vivant.

Ce groupement peut être central auquel n chaînes élastomères (n>2) sont liées formant une structure en étoile. On dira alors que l'élastomère diénique est étoilé. C'est généralement un élastomère obtenu par réaction de n chaînes de l'élastomère vivant sur un agent d'étoilage, c'est à dire toute molécule multifonctionnelle, la fonction étant tout type de groupement chimique connu par l'homme de l'art pour réagir avec un bout de chaîne vivant.

L'homme du métier comprendra qu'une réaction de fonctionnalisation avec un agent comprenant plus d'une fonction réactive vis-à-vis de l'élastomère vivant, résulte en un mélange d'espèces fonctionnalisées en bout de chaîne et en milieu de chaîne, constituant les chaînes linéaires de l'élastomère fonctionnalisé, ainsi que le cas échéant d'espèces étoilées. Selon les conditions opératoires, principalement le rapport molaire de l'agent de fonctionnalisation aux chaînes vivantes, certaines espèces sont majoritaires dans le mélange.

Préférentiellement pour les besoins de l'invention, ledit élastomère diénique de très basse Tg présente une Tg comprise dans un domaine allant de -100°C à -80°C, de préférence de -95°C à -80°C.

De préférence également, ledit élastomère diénique de très basse Tg présente une viscosité Mooney comprise dans un domaine allant de 50 à 80. Dans la présente description, on entend par viscosité Mooney, la viscosité Mooney ML(1+4)100 °C d'un composé, notamment de l'élastomère diénique modifié de l'invention, mesurée selon la norme ASTM D1646.

Selon un mode de réalisation préféré, ledit élastomère diénique de très basse Tg comprend un copolymère de butadiène et de monomère vinylaromatique, de préférence le styrène, présentant un taux d'unité vinylaromatique compris entre 0 et 5% en poids, de préférence de 1 à 4% en poids, ainsi qu'un taux d'unité vinylique par rapport à la portion diénique allant de 8 à 15% en poids, de préférence allant de 10 à 15% en poids, par rapport au poids total de l'élastomère diénique.

De préférence, au moins 70 % en poids dudit copolymère de butadiène et de monomère vinylaromatique est fonctionnalisé, préférentiellement par un groupe alcoxysilane, éventuellement partiellement ou totalement hydrolysé en silanol, le groupe alcoxysilane étant porteur on non d'une autre fonction susceptible d'interagir avec une charge renforçante le groupe alcoxysilane étant lié à l'élastomère diénique par l'intermédiaire de l'atome de silicium. Préférentiellement, ledit copolymère de butadiène et de monomère vinylaromatique est fonctionnalisé majoritairement en milieu de chaîne. La microstructure de ces élastomères peut être déterminée par la présence ou non d'un agent polaire et les quantités d'agent polaire employées lors de l'étape de polymérisation anionique. Préférentiellement, lorsque l'élastomère diénique est à base d'un diène et de styrène, un agent polaire est utilisé lors de l'étape de polymérisation dans des quantités telles qu'il favorise la répartition statistique du styrène le long des chaînes polymères tout en conservant le taux de liaisons -1,2 de préférence entre 8% et 15%, de préférence de 10 à 15%.

On entend par "groupe alcoxysilane interagissant de manière privilégiée avec la charge renforçante" ou "fonction susceptible d'interagir avec une charge renforçante", tout groupe alcoxysilane ou fonction autre, préférentiellement amine, capable de former, au sein d'une composition de caoutchouc renforcée au moyen d'une charge, une liaison physique ou chimique avec ladite charge. Cette interaction peut s'établir par exemple par le biais de liaisons covalentes, hydrogène, ioniques et/ou électrostatiques entre ladite fonction et des fonctions présentes sur des charges.

Le radical alcoxy du groupe alcoxysilane peut être de formule R'O-, où R' représente un groupe alkyle, substitué ou non substitué, en C1-C10, voire en C1-C8, de préférence un groupe alkyle en C1-C4, plus préférentiellement méthyle et éthyle.

A titre très préférentiel selon cette deuxième variante, l'autre fonction susceptible d'interagir avec une charge renforçante est une amine primaire, secondaire ou tertiaire. Cette variante de l'invention est particulièrement avantageuse du fait de l'amélioration des propriétés hystérétiques.

Dans la présente description, on entend par amine primaire ou secondaire une amine primaire ou secondaire protégée ou non par un groupement protecteur connu de l'homme du métier.

A titre de fonction amine secondaire ou tertiaire, on peut citer les amines substituées par des radicaux alkyle

en C1-C10, de préférence alkyle en C1-C4, plus préférentiellement un radical méthyle ou éthyle, ou alors les amines cycliques formant un hétérocycle contenant un atome d'azote et au moins un atome de carbone, de préférence de 2 à 6 atomes de carbone. Par exemple, conviennent les groupements méthylamino-, diméthylamino-, éthylamino-, diéthylamino-, propylamino-, dipropylamino-, butylamino-, dibutylamino-, pentylamino-, dipentylamino-, hexylamino-, dihexylamino-, hexaméthylèneamino-, de préférence les groupements diéthylamino- et diméthylamino-.

De préférence, la fonction susceptible d'interagir avec une charge renforçante est une fonction amine tertiaire, de préférence diéthylamine ou diméthylamine.

Selon une variante de l'invention, la fonction, préférentiellement amine primaire, secondaire ou tertiaire, susceptible d'interagir avec une charge renforçante est directement liée à l'atome de silicium lui-même directement lié à l'élastomère diénique.

Selon une autre variante de l'invention, la fonction, préférentiellement amine primaire, secondaire ou tertiaire, susceptible d'interagir avec une charge renforçante et l'atome de silicium lié à l'élastomère diénique sont reliés entre eux par un groupement espaceur qui peut être un atome ou un groupe d'atomes. Le groupement espaceur peut être un radical hydrocarboné divalent, linéaire ou ramifié, aliphatique en C1-C18, saturé ou non, cyclique ou non, ou un radical hydrocarboné divalent aromatique en C6-C18 et peut contenir un ou plusieurs radicaux aromatiques et/ou un ou plusieurs hétéroatomes. Le radical hydrocarboné peut éventuellement être substitué.

De préférence, ledit copolymère de butadiène et de monomère vinylaromatique comprend plus de 0 et jusqu'à 30% en poids (plus préférentiellement entre 0 et 20 %), par rapport au poids total de copolymère de butadiène et de monomère vinylaromatique, d'un copolymère de butadiène et de monomère vinylaromatique étoilé.

De préférence, ledit copolymère de butadiène et de monomère vinylaromatique est présent à un taux compris dans un domaine allant de 50 à 100 pce, de préférence de 75 à 100 pce, très préférentiellement de 90 à 100 pce.

Selon un mode de réalisation préférentiel, ledit élastomère diénique de très basse Tg comprend un homopolymère de butadiène, de préférence à un taux compris dans un domaine allant de 1 à 50 pce, de préférence de 1 à 30 pce, très préférentiellement de 1 à 10 pce.

Selon un autre mode de réalisation préférentiel, ledit copolymère de butadiène et de monomère vinylaromatique est présent à un taux de 100 pce.

De manière préférentielle, la composition selon l'invention comprend un taux total d'élastomères diéniques de très basse Tg de 75 à 100 pce, de préférence de 90 à 100 pce et plus préférentiellement de 100 pce.

Lorsque la composition en comprend, les élastomères complémentaires des élastomères diéniques de très basse Tg peuvent être tous les élastomères connus de l'homme du métier.

I-2 Charge renforçante

La composition selon l'invention comprend une charge renforçante. On peut utiliser tout type de charge renforçante connue pour ses capacités à renforcer une composition de caoutchouc utilisable pour la fabrication de pneumatiques, par exemple une charge organique tel que du noir de carbone, une charge inorganique renforçante telle que de la silice, de l'alumine, ou encore un coupage de ces deux types de charge.

Comme noirs de carbone conviennent tous les noirs de carbone, notamment les noirs dits de grade pneumatique. Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à un élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

La composition peut contenir un type de silice ou un coupage de plusieurs silices. La silice utilisée peut être toute silice renforçante connue de l'homme du métier, notamment toute silice précipitée ou pyrogénée présentant une surface BET ainsi qu'une surface spécifique CTAB toutes deux inférieures à 450 m2/g, de préférence de 30 à 400 m2/g. A titres de silices précipitées hautement dispersibles (dites "HDS"), on citera par exemple les silices « Ultrasil 7000 » et « Ultrasil 7005 » de la société Degussa, les silices « Zeosil » 1165MP, 1135MP et 1115MP de la société Rhodia, la silice « Hi-Sil EZ150G » de la société PPG, les silices « Zeopol » 8715, 8745 et 8755 de la Société Huber, des silices précipitées traitées telles que par exemple les silices "dopées" à l'aluminium décrites dans la demande EP-A-0735088 ou les silices à haute surface spécifique telles que décrites dans la demande WO 03/16837.

La silice a de préférence une surface BET comprise entre 45 et 400 m2/g, plus préférentiellement comprise entre 60 et 300 m2/g.

Ces compositions peuvent optionnellement également contenir, en complément des agents de couplage, des activateurs de couplage, des agents de recouvrement des charges inorganiques ou plus généralement des agents

d'aide à la mise en œuvre susceptibles de manière connue, grâce à une amélioration de la dispersion de la charge dans la matrice de caoutchouc et à un abaissement de la viscosité des compositions, d'améliorer leur faculté de mise en œuvre à l'état cru, ces agents étant par exemple des silanes hydrolysables tels que des alkylalkoxysilanes, des polyols, des acides gras, des polyéthers, des amines primaires, secondaires ou tertiaires, des polyorganosiloxanes hydroxylés ou hydrolysables.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés dits "symétriques" répondant à la formule générale (III) suivante:

(III) Z - A - Sx - A - Z ,

dans laquelle:

- x est un entier de 2 à 8 (de préférence de 2 à 5) ;
- A est un radical hydrocarboné divalent (de préférence des groupements alkylène en C1-C18 ou des groupements arylène en C6-C12, plus particulièrement des alkylènes en C1-C10, notamment en C1-C4, en particulier le propylène) ;
- Z répond à l'une des formules ci-après:

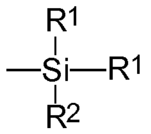 ; 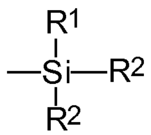 ; 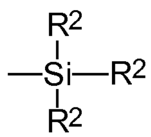 ,

dans lesquelles:

- les radicaux R1, substitués ou non substitués, identiques ou différents entre eux, représentent un groupe alkyle en C1-C18, cycloalkyle en C5-C18 ou aryle en C6-C18 (de préférence des groupes alkyle en C1-C6, cyclohexyle ou phényle, notamment des groupes alkyle en C1-C4, plus particulièrement le méthyle et/ou l'éthyle).
- les radicaux R2, substitués ou non substitués, identiques ou différents entre eux, représentent un groupe alkoxyle en C1-C18 ou cycloalkoxyle en C5-C18 (de préférence un groupe choisi parmi alkoxyles en C1-C8 et cycloalkoxyles en C5-C8, plus préférentiellement encore un groupe choisi parmi alkoxyles en C1-C4, en particulier méthoxyle et éthoxyle).

Dans le cas d'un mélange d'alkoxysilanes polysulfurés répondant à la formule (III) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en œuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C1-C4)-alkyl(C1-C4)silyl-alkyl(C1-C4)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C2H5O)3Si(CH2)3S2]2 ou le disulfure de bis-(triéthoxysilylpropyle), en abrégé TESPD, de formule [(C2H5O)3Si(CH2)3S]2. On citera également à titre d'exemples préférentiels les polysulfures (notamment disulfures, trisulfures ou tétrasulfures) de bis-(monoalkoxyl(C1-C4)-dialkyl(C1-C4)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera également les POS (polyorganosiloxanes) bifonctionnels ou encore des polysulfures d'hydroxysilane (R2 = OH dans la formule III ci-dessus) tels que décrits dans les demandes de brevet WO 02/30939 (ou US 6,774,255) et WO 02/31041 (ou US 2004/051210), ou encore des silanes ou POS porteurs de groupements fonctionnels azo-dicarbonyle, tels que décrits par exemple dans les demandes de brevet WO 2006/125532, WO 2006/125533, WO 2006/125534.

Dans les compositions de caoutchouc conformes à l'invention, la teneur en agent de couplage est préférentiellement comprise entre 1 et 15 pce, plus préférentiellement entre 3 et 14 pce.

L'homme du métier comprendra qu'à titre de charge équivalente de la silice décrite dans le présent paragraphe, pourrait être utilisée une charge renforçante d'une autre nature, notamment organique, dès lors que cette charge renforçante serait recouverte d'une couche de silice, ou bien comporterait à sa surface des sites fonctionnels, notamment hydroxyles, nécessitant l'utilisation d'un agent de couplage pour établir la liaison entre la charge et l'élastomère.

L'état physique sous lequel se présente la charge renforçante est indifférent, que ce soit sous forme de poudre, de microperles, de granulés, de billes ou toute autre forme densifiée appropriée.

Pour les besoins de l'invention, le taux de charge renforçante totale (noir de carbone et/ou charge inorganique renforçante telle que silice) est de 5 à 200 pce, plus préférentiellement de 40 à 160 pce. En dessous de 5 pce de charge, la composition pourrait ne pas être suffisamment renforcée tandis qu'au-dessus de 200 pce de charge, la composition pourrait être moins performante en résistance au roulement.

De préférence, on utilise la silice comme charge majoritaire, de préférence, à un taux allant de 40 à 150 pce, plus préférentiellement de 90 à 150 pce ; et optionnellement du noir de carbone. Le noir de carbone, lorsqu'il est présent, est utilisé de manière minoritaire, de préférence à un taux compris dans un domaine allant de 0,1 à 10 pce, plus préférentiellement de 0,5 à 10 pce, notamment de 1 à 5 pce.

I-3 Système de réticulation

Dans la composition de l'invention, on peut utiliser tout type de système de réticulation connu de l'homme du métier pour les compositions de caoutchouc.

De préférence, le système de réticulation est un système de vulcanisation, c'est-à-dire à base de soufre (ou d'un agent donneur de soufre) et d'un accélérateur primaire de vulcanisation. A ce système de vulcanisation de base peuvent venir s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine).

Le soufre est utilisé à un taux préférentiel compris entre 0,5 et 10 pce, plus préférentiellement compris entre 0,5 et 5 pce, en particulier entre 0,5 et 3 pce.

Le système de vulcanisation de la composition selon l'invention peut également comprendre un ou plusieurs accélérateurs additionnels, par exemple les composés de la famille des thiurames, les dérivés dithiocarbamates de zinc, les sulfénamides, les guanidines ou les thiophosphates. On peut utiliser en particulier tout composé susceptible d'agir comme accélérateur de vulcanisation des élastomères diéniques en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-tert-butyl-2-benzothiazyle sulfénamide (en abrégé "TBBS"), N-tert-butyl-2-benzothiazyle sulfénimide (en abrégé "TBSI"), dibenzyldithiocarbamate de zinc (en abrégé "ZBEC") et les mélanges de ces composés. De préférence, on utilise un accélérateur primaire du type sulfénamide.

I-4 Résine hydrocarbonée spécifique

La composition selon l'invention comporte une résine hydrocarbonée spécifique.

Cette résine hydrocarbonée est majoritairement composée d'unités issues de monomères terpènes et phénols, et présente un taux de proton aromatique supérieur à 15%. Ce type de résine est décrit dans le document WO2010/144890.

De préférence, la résine hydrocarbonée utile aux besoins de l'invention présente un taux de proton aromatique compris dans un domaine allant de 15 à 40%, de préférence compris dans un domaine allant de 20% à 40%, de préférence de 20% à 30%.

Selon un mode de réalisation préférentiel, la résine hydrocarbonée utile aux besoins de l'invention présente un taux de fonction hydroxyle compris entre 0 et 160 mg de KOH/g (équivalent mg de KOH par g de résine), de préférence compris dans un domaine allant de 1 à 50 mg/g, de préférence de 5 à 30 mg de KOH/g.

De préférence également, la résine hydrocarbonée utile aux besoins de l'invention présente un taux de proton éthylénique inférieur à 1%, de préférence inférieur à 0,5%. Plus préférentiellement, la résine ne comprend pas de motif éthylénique.

La résine hydrocarbonée utile aux besoins de l'invention présente une masse moléculaire moyenne Mn supérieure à 600 g/mol, de préférence supérieure à 800 g/mol.

De préférence, la résine hydrocarbonée utile aux besoins de l'invention présente un indice de polymolécularité (Ip) inférieur à 1,7, de préférence inférieur à 1,6.

Dans le commerce, il existe de nombreuses résines hydrocarbonées disponibles. Ces résines peuvent présenter

des caractéristiques, notamment de composition chimique, de Mn, de taux de proton aromatique, éthylénique ou encore d'Ip qui diffèrent selon les fournisseurs.

La macrostructure (Mw, Mn, Ip et Mz) de la résine hydrocarbonée est déterminée par chromatographie d'exclusion stérique (SEC) sur la base des normes ISO 16014 (*Determination of average molecular mass and molecular mass distribution of polymers using size exclusion chromatography*), ASTM D5296 (*Molecular Weight Averages and molecular weight distribution of polystyrene by High performance size exclusion chromatography*), et DIN 55672 (chromatographie d'exclusion stérique).

Pour ces mesures, l'échantillon de résine est solubilisé dans du tetrahydrofurane non antioxydé jusqu'à une concentration de 1,5 g/l. La solution est filtrée avec un filtre téflon de porosité de 0,45 $\mu$m, en utilisant par exemple une seringue à usage unique montée d'un filtre. Un volume de 100 $\mu$l est injecté à travers un jeu de colonnes de chromatographie d'exclusion stérique. La phase mobile est éluée avec un débit de 1 ml/min. Les colonnes sont thermostatées dans un four à 35°C. La détection est assurée par un réfractomètre thermostaté à 35°C. La phase stationnaire des colonnes est à base d'un gel de polystyrène divinylbenzène à porosité maîtrisée. Les chaînes polymères sont séparées selon la taille qu'elles occupent quand elles sont solubilisées dans le solvant: plus elles occupent un volume important, moins les pores des colonnes leur sont accessibles et plus leur temps d'élution est faible.

Une courbe d'étalonnage de Moore reliant le logarithme de la masse molaire (logM) au temps d'élution (te) est préalablement réalisée avec des étalons polystyrène, et modélisée par un polynome d'ordre 3 : Log (masse molaire de polystyrène) = a + b te + c te2 + d te3.

Pour la courbe d'étalonnage on utilise des étalons de polystyrène à distributions moléculaires étroites (indice de polymolécularité, Ip, inférieur ou égal à 1,1). Le domaine de masses molaires de ces étalons s'étend de 160 à environ 70 000 g/mol. Ces étalons peuvent être rassemblés par « familles » de 4 ou 5 étalons ayant un incrément d'environ 0,55 en log de M entre chaque.

On peut utiliser des kits étalons certifiés (ISO 13885 et DIN 55672) comme par exemple les kits de vials de la société PSS (polymer standard service, référence PSS-pskitr1I-3), ainsi qu'un PS étalon supplémentaire de Mp = 162 g/mol (Interchim, référence 178952). Ces kits se présentent sous la forme de 3 vials contenant chacun une famille de polystyrène étalons dans des quantités adaptées :

- Vial noir : Mp = 1 220, 4 850, 15 500 et 67 500 g/mol.
- Vial bleu : Mp = 376, 3 470, 10 400, 46 000 g/mol.
- Vial jaune : Mp = 266, 1 920, 7 200, 28 000 g/mol.
- PS162 : Mp = 162 g/mol

Les masses molaires moyennes en nombre (Mn), en masse (Mw), la Mz, et la polydispersité de la résine analysée sont calculées à partir de cette courbe d'étalonnage. C'est pourquoi, on parle de masses molaires relatives à un étalonnage polystyrène.

Pour le calcul des masses moyennes et de l'Ip, on définit sur le chromatogramme correspondant à l'injection de l'échantillon les bornes d'intégration de l'élution du produit. On « découpe » le signal réfractométrique défini entre les 2 bornes d'intégration toutes les secondes. On relève pour chacune des "découpes élémentaires", le temps d'élution ti et l'aire du signal du détecteur Ai.

On rappelle ici que : Ip = Mw/Mn avec Mw masse moléculaire moyenne en poids, et Mn masse moléculaire en nombre. On rappelle également que les masses Mw, Mn et Mz sont des masses moyennes calculées d'après les formules ci-dessous :

$$MZ = \frac{\sum Ai * Mi^2}{\sum Ai * Mi}$$

$$Mn = \frac{\sum Ai}{\sum \frac{Ai}{Mi}}$$

$$Mw = \frac{\sum Ai * Mi}{\sum Ai}$$

dans lesquelles Ai est l'amplitude du signal du détecteur refractométrique correspondant à la masse Mi et au temps d'élution ti.

Le matériel utilisé pour la mesure de SEC est une chaîne de chromatographie en phase liquide par exemple la chaîne Alliance 2690 de WATERS comprenant une pompe, un dégazeur et un injecteur ; un réfractomètre différentiel (par exemple le réfractomètre 2410 de WATERS), un logiciel d'acquisition et de traitement des données, par exemple le logiciel EMPOWER de WATERS, un four à colonnes, par exemple le WATERS « columns Heater Module » et 4 colonnes montées en série dans l'ordre suivant :

| ***Numéro*** | ***Marque*** | ***Domaine de masses molaires (g/mol)*** | ***Longueur (mm)*** | ***Diamètreinterne (mm)*** | ***Taille des particule s (µm)*** | ***Désignation commerciale*** | ***Références (à titre indicatif)*** |
|---|---|---|---|---|---|---|---|
| Colonnes 1 et 2 | Polymer Laboratories | 200 - 400000 | 300 | 7,5 | 5 | MIXED-D | PL1110-6504 |
| Colonnes 3 et 4 | Polymer Laboratories | 200 - 30000 | 300 | 7,5 | 3 | MIXED-E | PL1110-6300 |

Le taux de proton aromatique (%HA) et le taux de proton éthylénique (%HE) sont mesurés par RMN 1H. Cette détermination est réalisée par rapport à l'ensemble des signaux détectés. Ainsi, les résultats obtenus sont exprimés en % d'aire de pic.

Les échantillons sont solubilisés dans le chloroforme deutéré (CDCl3) à raison d'environ 10mg de résine dans environ 1mL de solvant. Les spectres sont acquis sur un spectromètre Avance 500 MHz Bruker équipé d'une sonde "large bande" BBO z-grad 5 mm Bruker. L'expérience RMN 1H utilise une séquence simple impulsion 30° et un délai de répétition de 5 secondes entre chaque acquisition. 64 accumulations sont réalisées à température ambiante. Les déplacements chimiques sont calibrés par rapport à l'impureté protonée du chloroforme deutéré ; δppm 1H à 7,20 ppm. Les signaux RMN 1H des protons aromatiques sont situés entre 8,5ppm et 6,2ppm. Les protons éthyléniques quant à eux engendrent des signaux entre 6,2ppm et 4,5ppm. Enfin, les signaux correspondant aux protons aliphatiques sont situés entre 4,5ppm et 0ppm. Les aires de chaque catégorie de protons sont rapportées à la somme de ces aires pour ainsi donner une répartition en % d'aire de chaque catégorie de protons.

Le taux de fonction hydroxyle, exprimé en mg de KOH/g est mesuré selon la norme ASTM E222.

Les résines ci-dessous, disponibles dans le commerce, ont été analysées avec les méthodes décrites ci-dessus pour déterminer leurs caractéristiques, le tableau 1 récapitule les résultats obtenus.

**Tableau 1**

| Résine | Fournisseur | Nom Commercial | Tg (°C) | Monomères | Taux H arom. (%) | Taux H éthyl. (%) | Taux H aliph. (%) | Mn (g/mol) | Mw (g/mol) | Ip | Taux OH (mg de KOH/g) |
|---|---|---|---|---|---|---|---|---|---|---|---|
| Résine 1 | Arizona | "Sylvatraxx 6720" | 67 | Terpène Phénol | 27 | <1 | 72 | 881 | 1291 | 1,47 | 13 |
| Résine 2 | Arizona | "Sylvares TP 2040" | 76 | Terpène Phénol | 13 | 3 | 84 | 607 | 770 | 1,27 | 140 |
| Résine 3 | Arizona | "Sylvares TP 7042" | 100 | Terpène Phénol | 10 | 2 | 88 | 778 | 972 | 1,25 | 100 |
| Résine 4 | DRT | "Dertophen e 1510" | 105 | Terpène Phénol | 10 | 2 | 88 | 763 | 941 | 1,23 | - |
| Résine 5 | Arizona | "Sylvares TP 2019" | 70 | Terpène Phénol | 8 | 1 | 91 | 669 | 917 | 1,37 | 80 |
| Résine 6 | DRT | "Dercolyte L120" | 74 | D-Limonène | 1 | 2 | 98 | 670 | 1130 | 1,69 | 0 |

Le tableau 1, par l'analyse des résines du commerce, montre que seule la résine 1 satisfait aux critères de la résine utile aux besoins de l'invention.

La résine utile aux besoins de l'invention, majoritairement composée d'unités issues de monomères terpènes et phénols, peut comprendre, en plus de ces unités, et à titre minoritaire, des unités aliphatiques, ou aromatiques ou encore du type aliphatique/ aromatique c'est-à-dire à base de monomères aliphatiques et/ou aromatiques, autres que terpènes et phénols. Ce type de résine est décrit dans le document WO2010/144890.

A titre de monomères terpéniques, conviennent par exemple l'alphapinène, le bétapinène, les carènes, de limonène ou le dipentene. A titre de monomères phénoliques conviennent notamment le phénol ou les phénols alkylés.

A titre de monomères aromatiques conviennent par exemple le styrène, l'alpha-méthylstyrène, l'ortho-, méta-, para-méthylstyrène, le vinyle-toluène, le para-tertiobutylstyrène, le divinylbenzène, le vinylnaphtalène, l'indène, tout monomère vinylaromatique issu d'une coupe C9 (ou plus généralement d'une coupe C8 à C10). De préférence, le monomère vinylaromatique est du styrène ou de l'alphamethylstyrène ou un monomère vinylaromatique issu d'une coupe C9 (ou plus généralement d'une coupe C8 à C10).

Le taux de résine dans la composition selon l'invention est compris dans un domaine allant de 50 pce à 150 pce, préférentiellement de 55 à 120 pce, plus préférentiellement de 60 à 115 pce, encore plus préférentiellement de 60 à 110 pce, mieux de 65 à 110 pce. En effet, en dessous de 50 pce de la résine utile aux besoins de l'invention, l'effet de la résine ne serait pas suffisant et la composition pourrait présenter des problèmes d'adhérence, tandis qu'au-dessus de 150 pce la composition pourrait présenter une difficulté de fabrication pour incorporer facilement toute la résine dans la composition.

## I-5 Autres additifs possibles

Les compositions de caoutchouc conformes à l'invention comportent optionnellement également tout ou partie des additifs usuels habituellement utilisés dans les compositions d'élastomères destinées notamment à la fabrication de bandes de roulement, comme par exemple des pigments, des agents de protection tels que cires anti-ozone, anti-ozonants chimiques, anti-oxydants, des agents plastifiants autres que ceux précédemment décrits, des agents anti-fatigue, des résines renforçantes, des accepteurs (par exemple résine phénolique novolaque) ou des donneurs de méthylène (par exemple HMT ou H3M).

La composition selon l'invention peut également comporter un système plastifiant. Ce système plastifiant peut être composé d'une résine hydrocarbonée de Tg supérieure à 20°C, en plus de la résine hydrocarbonée spécifique décrite précédemment, et/ou une huile plastifiante.

Bien entendu, les compositions conformes à l'invention peuvent être utilisées seules ou en coupage (i.e., en mélange) avec toute autre composition de caoutchouc utilisable pour la fabrication de pneumatiques.

Il va de soi que l'invention concerne les compositions de caoutchouc précédemment décrites tant à l'état dit "cru" ou non réticulé (i.e., avant cuisson) qu'à l'état dit "cuit" ou réticulé, ou encore vulcanisé (i.e., après réticulation ou vulcanisation).

## II- Préparation des compositions de caoutchouc

Les compositions sont fabriquées dans des mélangeurs appropriés, en utilisant deux phases de préparation successives bien connues de l'homme du métier: une première phase de travail ou malaxage thermo-mécanique (parfois qualifiée de phase "non-productive") à haute température, jusqu'à une température maximale comprise entre 110°C et 200°C, de préférence entre 130°C et 180°C, suivie d'une deuxième phase de travail mécanique (parfois qualifiée de phase "productive") à plus basse température, typiquement inférieure à 110°C, par exemple entre 60°C et 100°C, phase de finition au cours de laquelle est incorporé le système de réticulation ou vulcanisation; de telles phases ont été décrites par exemple dans les demandes EP-A-0501227, EP-A-0735088, EP-A-0810258, WO00/05300 ou WO00/05301.

La première phase (non-productive) est conduite préférentiellement en plusieurs étapes thermomécaniques. Au cours d'une première étape on introduit, dans un mélangeur approprié tel qu'un mélangeur interne usuel, les élastomères, les charges renforçantes, la résine hydrocarbonée (et éventuellement les agents de couplage et/ou d'autres ingrédients à l'exception du système de réticulation), à une température comprise entre 20°C et 100°C et, de préférence, entre 25°C et 100°C. Après quelques minutes, préférentiellement de 0,5 à 2 min et une montée de la température à 90°C à 100°C, les autres ingrédients (c'est-à-dire, ceux qui restent si tous n'ont pas été mis au départ) sont ajoutés en une fois ou par parties, à l'exception du système de réticulation durant un mélangeage allant de 20 secondes à quelques minutes. La durée totale du malaxage, dans cette phase non-productive, est de préférence comprise entre 2 et 10 minutes à une température inférieure ou égale à 180°C, et préférentiellement inférieure ou égale à 170°C.

Après refroidissement du mélange ainsi obtenu, on incorpore alors le système de réticulation à basse température (typiquement inférieure à 100°C), généralement dans un mélangeur externe tel qu'un mélangeur à cylindres; le tout est alors mélangé (phase productive) pendant quelques minutes, par exemple entre 5 et 15 min.

La composition finale ainsi obtenue est ensuite calandrée, par exemple sous la forme d'une feuille ou d'une plaque, notamment pour une caractérisation au laboratoire, ou encore extrudée, pour former par exemple un profilé de caoutchouc utilisé pour la fabrication de semi-finis pour pneumatiques. Ces produits peuvent ensuite être utilisés pour la fabrication de pneumatiques, selon les techniques connues de l'homme du métier, avec l'avantage de l'invention, à savoir un bon collant des couches les unes sur les autres avant cuisson du pneumatique.

La réticulation (ou cuisson) est conduite de manière connue à une température généralement comprise entre 130°C et 200°C, sous pression, pendant un temps suffisant qui peut varier par exemple entre 5 et 90 min en fonction notamment de la température de cuisson, du système de réticulation adopté, de la cinétique de réticulation de la composition considérée ou encore de la taille du pneumatique.

Les exemples qui suivent illustrent l'invention sans toutefois la limiter.

## III- Exemples de réalisation de l'invention

### III-1 Préparation des exemples

Dans les exemples qui suivent les compositions caoutchouteuses ont été réalisées comme décrit précédemment.

### III-2 Caractérisation des exemples

Dans les exemples, les compositions de caoutchouc sont caractérisées avant et/ou après cuisson comme indiqué ci-après.

#### Essais de traction (après cuisson)

Ces essais de traction permettent de déterminer les modules d'élasticité et les propriétés à la rupture et sont basées sur la norme NF ISO 37 de décembre 2005. On mesure à 23°C en seconde élongation (i.e., après un cycle d'accommodation au taux d'extension prévu pour la mesure elle-même) le module sécant nominal (ou contrainte apparente, en MPa, rapportée à la déformation, sans unité) à 100% d'allongement (notés MA100) et/ou à 300% d'allongement (notés MA300). Les contraintes vraies à la rupture (en MPa) et les allongements à la rupture (en %) peuvent également être également mesurés.

La valeur contrainte à la rupture est un bon indicateur de la cohésion du mélange, plus la valeur est élevée, meilleure est la cohésion. Pour plus de lisibilité les résultats seront indiqués selon la performance, en base 100, la valeur 100 étant attribuée au témoin. Un résultat inférieur à 100 indiquant une diminution de la performance de cohésion du mélange, et inversement, un résultat supérieur à 100, indiquera une augmentation de la performance.

#### Mesure de la viscosité Mooney (ou plasticité Mooney)

On utilise un consistomètre oscillant tel que décrit dans la norme française NF T 43-005 (1991). La mesure de plasticité Mooney se fait selon le principe suivant : la composition à l'état cru (i.e., avant cuisson) est moulée dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en "unité Mooney" (UM, avec 1 UM=0,83 Newton.mètre). Pour faciliter la lecture et la compréhension, les résultats sont donnés en performance base 100 ; c'est-à-dire qu'on affecte arbitrairement la valeur 100 au meilleur témoin, pour comparer ensuite les valeurs des différentes solutions testées. De cette façon, une valeur plus basse représente une diminution de la performance tandis qu'une valeur plus élevée représente une meilleure performance.

#### Propriétés dynamiques (après cuisson)

Les propriétés dynamiques G* et tan(δ)max sont mesurées sur un viscoanalyseur (Metravib V A4000), selon la norme ASTM D 5992 - 96. On enregistre la réponse d'un échantillon de composition vulcanisée (éprouvette cylindrique de 4 mm d'épaisseur et de 10 mm de diamètre), soumis à une sollicitation sinusoïdale en cisaillement simple alterné, à une fréquence de 10 Hz. On effectue un balayage en température de -80°C à +100°C avec une rampe de +1.5°C/min, sous une contrainte maximale de 0,7 MPa. La valeur de la tangente de l'angle de perte (Tan delta) est ensuite relevée à 0°C et 60°C.

Pour la valeur de tan(δ) à 60°C, plus la valeur est basse, plus la composition aura une hystérèse faible et donc une résistance au roulement faible. Les résultats sont exprimés en performance base 100, c'est-à-dire qu'on affecte

arbitrairement la valeur 100 au meilleur témoin, pour comparer ensuite le tan(δ) à 60°C (c'est-à-dire l'hystérèse - et donc la résistance au roulement) des différentes solutions testées. La valeur en base 100 est calculée selon l'opération : (valeur de tan(δ) à 60°C du témoin / valeur de tan(δ) à 60°C de l'échantillon) * 100. De cette façon, une valeur plus basse représente une diminution de la performance en hystérèse (c'est-à-dire une augmentation de l'hystérèse) tandis qu'une valeur plus élevée représente une meilleure performance en hystérèse (c'est-à-dire une hystérèse plus faible).

Pour la valeur de tan(δ) 0°C, plus la valeur est élevée, plus la composition permettra une bonne adhérence humide. Les résultats sont exprimés en performance base 100, c'est-à-dire qu'on affecte arbitrairement la valeur 100 au meilleur témoin, pour calculer et comparer ensuite le tan(δ) à 0°C des différentes solutions testées. La valeur en base 100 est calculée selon l'opération : (valeur de tan(δ) à 0°C de l'échantillon / valeur de tan(δ) à 60°C du témoin) * 100. De cette façon, une valeur plus basse représente une diminution de la performance en adhérence

(c'est-à-dire une valeur de tan(δ) à 0°C plus faible) tandis qu'une valeur plus élevée représente une meilleure performance en adhérence (c'est-à-dire une valeur de tan(δ) à 0°C plus élevée).

III-3 Exemples

Les compositions sont fabriquées avec une introduction de l'ensemble des constituants sur un mélangeur interne, à l'exception du système de vulcanisation. Les agents de vulcanisation (soufre et accélérateur) sont introduits sur un mélangeur externe à basse température (les cylindres constitutifs du mélangeur étant à environ 30°C).

SBR A- Préparation d'un SBR fonctionnel aminoalcoxysilane en milieu de chaîne de Tq -88°C

Dans un réacteur alimenté en continu agité de 32 L, supposé parfaitement agité selon l'homme de l'art, sont introduits en continu du méthylcyclohexane, du butadiène, du styrène et du tétrahydrofurfuryl éthyle éther, selon les proportions suivantes : débit massique butadiène = 4,013 kg.h-1, débit massique styrène = 0,122 kg.h-1, concentration massique en monomère = 9,75 wt.%, 15 ppm tétrahydrofurfuryle éthyle éther. Du n-butyllithium (n-BuLi) est introduit en quantité suffisante afin de neutraliser les impuretés protiques apportées par les différents constituants présents à l'entrée du premier réacteur ; 850 μmol de n-BuLi pour 100 g de monomère sont introduits.

Les différents débits sont calculés afin que le temps de séjour moyen dans le réacteur soit de 35 min. La température est maintenue à 95 °C. A la sortie du réacteur de polymérisation, un prélèvement de solution de polymère est effectué. Le polymère ainsi obtenu est soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine. Le polymère traité est ensuite séparé de sa solution par une opération de stripping à la vapeur d'eau, puis séché sur un outil à cylindres à 100 °C. La viscosité inhérente "initiale" mesurée est de 1,98 $dL.g^{-1}$. La masse molaire moyenne en nombre, Mn, déterminée par la technique de SEC, est de 90 000 g.mol-1 et l'indice de polymolécularité, Ip, est de 1,90. En sortie du réacteur de polymérisation, 440 μmol pour 100 g de monomère de 3-(N,N-diméthylaminopropyl)triméthoxysilane (Agent de couplage et d'étoilage AdC) en solution dans le méthylcyclohexane sont ajoutés à la solution de polymère vivant (AdC/Li = 0,52).

Le polymère ainsi obtenu est soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine. Le polymère ainsi traité est ensuite séparé de sa solution par une opération de stripping à la vapeur d'eau, puis séché sur un outil à cylindres à 100 °C.

La viscosité inhérente "finale" mesurée est de 2,52 dL.g-1. Le saut de viscosité, défini comme le rapport de ladite viscosité "finale" sur ladite viscosité "initiale", est ici de 1,27. La viscosité Mooney de ce polymère A est de 70. La masse molaire moyenne en nombre, Mn, déterminée par la technique de SEC, est de 168 600 g.mol-1 et l'indice de polymolécularité, Ip, est de 1,68. La microstructure de ce polymère est déterminée par la méthode NIR. Le taux de motifs 1,2 est de 12,7 % par rapport aux unités butadiène. Le taux massique de styrène est de 2,1 %. La température de transition vitreuse de ce polymère est de - 88 °C. Le cold-flow CF(1+6)100°C du polymère est de 0,52. La répartition des espèces après fonctionnalisation est donnée avec la méthode de modélisation décrite ci-dessus : 86% de chaînes fonctionnelles dont 77% sont fonctionnelles en milieu de chaîne et 14% de chaînes non fonctionnelles étoilées.

Compositions

Les exemples présentés dans le tableau 2 ont pour objet de comparer les différentes propriétés de caoutchouterie de compositions témoins (T1 à T7) aux propriétés de compositions conformes à l'invention (C1 et C2). Les propriétés mesurées avant et après cuisson sont présentées au tableau 3.

Tableau 2

| Composition | T1 | T2 | C1 | C2 | T3 | T4 | T5 | T6 | T7 |
|---|---|---|---|---|---|---|---|---|---|
| Elastomère 1 (1) | 100 | 0 | 0 | 0 | 0 | 0 | 0 | 0 | 0 |
| Elastomère 2 (2) | 0 | 100 | 100 | 0 | 100 | 100 | 100 | 100 | 100 |
| Elastomère 3 (3) | 0 | 0 | 0 | 100 | 0 | 0 | 0 | 0 | 0 |
| Noir de carbone (4) | 4 | 4 | 4 | 4 | 4 | 4 | 4 | 4 | 4 |
| Silice (5) | 130 | 130 | 130 | 130 | 130 | 130 | 130 | 130 | 130 |
| Agent de couplage (6) | 13 | 13 | 13 | 13 | 13 | 13 | 13 | 13 | 13 |
| Résine 1 (7) | 88 | 40 | 88 | 88 | 0 | 0 | 0 | 0 | 0 |
| Résine 2 (7) | 0 | 0 | 0 | 0 | 88 | 0 | 0 | 0 | 0 |
| Résine 3 (7) | 0 | 0 | 0 | 0 | 0 | 88 | 0 | 0 | 0 |
| Résine 4 (7) | 0 | 0 | 0 | 0 | 0 | 0 | 88 | 0 | 0 |
| Résine 5 (7) | 0 | 0 | 0 | 0 | 0 | 0 | 0 | 88 | 0 |
| Résine 6 (7) | 0 | 0 | 0 | 0 | 0 | 0 | 0 | 0 | 88 |
| Antioxydant (8) | 6 | 6 | 6 | 6 | 6 | 6 | 6 | 6 | 6 |
| Acide stéarique (9) | 3 | 3 | 3 | 3 | 3 | 3 | 3 | 3 | 3 |
| DPG (10) | 2,5 | 2,5 | 2,5 | 2,5 | 2,5 | 2,5 | 2,5 | 2,5 | 2,5 |
| ZnO (11) | 1 | 1 | 1 | 1 | 1 | 1 | 1 | 1 | 1 |
| Accélérateur (12) | 2,3 | 2,3 | 2,3 | 2,3 | 2,3 | 2,3 | 2,3 | 2,3 | 2,3 |
| Soufre | 0,7 | 0,7 | 0,7 | 0,7 | 0,7 | 0,7 | 0,7 | 0,7 | 0,7 |

(1) Elastomère 1 : SBR solution avec 27% de motif styrène et 24% de motif 1,2 de la partie butadiénique (Tg = -48°C),
(2) Elastomère 2 : SBR A tel que préparé ci-dessus, avec 2,1% de motif styrène et 12,7% de motif 1,2 de la partie butadiénique (Tg = -88°C)
(3) Elastomère 3 : BR « N103 » commercialisé par la société Asahi avec 13% de motif 1,2 de la partie butadiénique (Tg = -92°C)
(4) Noir de carbone Grade ASTM N234
(5) Silice « Zeosil 1165 MP » de la société Solvay type « HDS »
(6) Agent de couplage : « Si69 » de la société Evonik - Degussa
(7) Résines 1 à 6 : cf Tableau 1 ci-dessus
(8) N-(1,3-diméthylbutyl)-N'-phényl-p-phénylènediamine (Santoflex 6-PPD) de la société Flexsys
(9) Stéarine « Pristerene 4931 » de la société Uniqema
(10) Diphénylguanidine « Perkacit DPG » de la société Flexsys
(11) Oxyde de zinc de grade industriel - société Umicore
(12) N-cyclohexyl-2-benzothiazol-sulfénamide (« Santocure CBS » de la société Flexsys)

Tableau 3

| Composition | T1 | T2 | C1 | C2 | T3 | T4 | T5 | T6 | T7 |
|---|---|---|---|---|---|---|---|---|---|
| Performance tan delta 0°C (base 100) | 100 | 62 | 97 | 103 | 22 | 51 | 36 | 95 | 98 |
| Performance tan delta 60°C (base 100) | 100 | 98 | 94 | 96 | 34 | 50 | 45 | 85 | 100 |
| Performance contrainte rupture (base 100) | 100 | 109 | 114 | 90 | 98 | 120 | 115 | 105 | 84 |
| Performance Mooney (base 100) | 100 | 49 | 102 | 147 | 95 | 100 | 93 | 98 | 101 |
| Moyenne des performances | 100 | 80 | 102 | 109 | 62 | 80 | 72 | 96 | 96 |

Par rapport aux compositions témoins, on note que les compositions C1 et C2, conformes à l'invention permettent un compromis amélioré des performances de cohésion, d'adhérence, de résistance au roulement et de processabilité des compositions, comme indiqué par la moyenne des performances au tableau 3.

## Revendications

1. Composition de caoutchouc à base d'au moins :

   - de 50 à 100 pce d'un ou plusieurs élastomères diéniques dits de très basse température de transition vitreuse (Tg) présentant une Tg comprise dans un domaine allant de -110°C à -70°C, choisis parmi les homopolymères de butadiène, les copolymères de butadiène et de monomère vinylaromatique, présentant un taux d'unité vinylaromatique compris entre 0 et 5% en poids, et les mélanges de ces derniers,
   - une charge renforçante,
   - un système de réticulation
   - de 50 à 150 pce d'au moins une résine hydrocarbonée majoritairement composée d'unités issues de monomères terpènes et phénols, la résine présentant un taux de proton aromatique supérieur à 15%.

2. Composition selon la revendication 1, dans laquelle ledit élastomère diénique de très basse Tg est présent à un taux total de 75 à 100 pce, de préférence de 100 pce.

3. Composition selon l'une quelconque des revendications précédentes, dans laquelle ledit élastomère diénique de très basse Tg présente une Tg comprise dans un domaine allant de -100°C à -80°C, de préférence de -95°C à -80°C.

4. Composition selon l'une quelconque des revendications précédentes dans laquelle ledit élastomère diénique de très basse Tg comprend un copolymère de butadiène et de monomère vinylaromatique, de préférence le styrène, présentant un taux d'unité vinylaromatique compris entre 0 et 5% en poids, de préférence de 1 à 4% en poids, ainsi qu'un taux d'unité vinylique par rapport à la portion diénique allant de 8 à 15% en poids, de préférence allant de 10 à 15% en poids, par rapport au poids total de l'élastomère diénique.

5. Composition selon la revendication 4 dans laquelle au moins 70 % en poids dudit copolymère de butadiène et de monomère vinylaromatique est fonctionnalisé.

6. Composition selon la revendication 5 dans laquelle ledit copolymère de butadiène et de monomère vinylaromatique est fonctionnalisé par un groupe alcoxysilane, éventuellement partiellement ou totalement hydrolysé en silanol, le groupe alcoxysilane étant porteur on non d'une autre fonction susceptible d'interagir avec une charge renforçante le groupe alcoxysilane étant lié à l'élastomère diénique par l'intermédiaire de l'atome de silicium.

7. Composition selon l'une quelconque des revendications 5 ou 6 dans laquelle ledit copolymère de butadiène et de monomère vinylaromatique est fonctionnalisé majoritairement en milieu de chaîne.

8. Composition selon l'une quelconque des revendications précédentes dans laquelle le taux de ladite résine hydrocarbonée est compris dans un domaine allant de 55 à 120 pce, de préférence de 60 à 115 pce.

9. Composition selon l'une quelconque des revendications précédentes dans laquelle la résine présente un taux de proton aromatique compris dans un domaine allant de 15 à 40%.

10. Composition selon l'une quelconque des revendications précédentes dans laquelle la résine présente un taux de fonction hydroxyle compris entre 0 et 160 mg de KOH/g, de préférence compris dans un domaine allant de 1 à 50 mg/g, de préférence de 5 à 30 mg de KOH/g.

11. Composition selon l'une quelconque des revendications précédentes dans laquelle la résine présente un taux de proton éthylénique inférieur à 1%, de préférence inférieur à 0,5%.

12. Composition selon l'une quelconque des revendications précédentes dans laquelle ladite résine hydrocarbonée présente une Mn supérieure à 600 g/mol, de préférence supérieure à 800 g/mol.

13. Composition selon l'une quelconque des revendications précédentes dans laquelle ladite résine hydrocarbonée

présente un indice de polymolécularité (Ip) inférieur à 1,7, de préférence inférieur à 1,6.

**14.** Composition selon l'une quelconque des revendications précédentes dans laquelle la charge renforçante est choisie dans le groupe constitué par les silices, les noirs de carbone et les mélanges de ces derniers.

**15.** Pneumatique comprenant une composition selon l'une quelconque des revendications 1 à 14.

## Patentansprüche

**1.** Kautschukzusammensetzung auf Basis von mindestens:

- 50 bis 100 phe eines oder mehrerer als Dienelastomere mit sehr niedriger Glasübergangstemperatur (Tg) bezeichneter Dienelastomere mit einer Tg in einem Bereich von -110 °C bis -70 °C, die aus Butadien-Homopolymeren, Copolymeren von Butadien und vinylaromatischem Monomer mit einem Gehalt an vinylaromatischen Einheiten zwischen 0 und 5 Gew.-% und Mischungen davon ausgewählt sind,
- einem verstärkenden Füllstoff,
- einem Vernetzungssystem,
- 50 bis 150 phe mindestens eines Kohlenwasserstoffharzes, das mehrheitlich aus Einheiten, die sich von Terpenen und Phenolen ableiten, besteht, wobei das Harz einen Gehalt an aromatischen Protonen von mehr als 15 % aufweist.

**2.** Zusammensetzung nach Anspruch 1, wobei das Dienelastomer mit sehr niedriger Tg in einem Gesamtgehalt von 75 bis 100 phe, vorzugsweise von 100 phe, vorliegt.

**3.** Zusammensetzung nach einem der vorhergehenden Ansprüche, wobei das Dienelastomer mit sehr niedriger Tg eine Tg in einem Bereich von -100 °C bis -80 °C, vorzugsweise von -95 °C bis -80 °C, aufweist.

**4.** Zusammensetzung nach einem der vorhergehenden Ansprüche, wobei das Dienelastomer mit sehr niedriger Tg ein Copolymer von Butadien und vinylaromatischem Monomer mit einem Gehalt an vinylaromatischen Einheiten zwischen 0 und 5 Gew.-%, vorzugsweise von 1 bis 4 Gew.-%, sowie einem Gehalt an Vinyleinheiten, bezogen auf den Dienteil, im Bereich von 8 bis 15 Gew.-%, vorzugsweise im Bereich von 10 bis 15 Gew.-%, bezogen auf das Gesamtgewicht des Dienelastomers, umfasst.

**5.** Zusammensetzung nach Anspruch 4, wobei mindestens 70 Gew.-% des Copolymers von Butadien und vinylaromatischem Monomer funktionalisiert sind.

**6.** Zusammensetzung nach Anspruch 5, wobei das Copolymer von Butadien und vinylaromatischem Monomer mit einer Alkoxysilangruppe, die gegebenenfalls teilweise oder vollständig zu Silanol hydrolysiert ist, funktionalisiert ist, wobei die Alkoxysilangruppe gegebenenfalls eine weitere Funktion, die mit einem verstärkenden Füllstoff wechselwirken kann, trägt, wobei die Alkoxysilangruppe über das Siliciumatom an das Dienelastomer gebunden ist.

**7.** Zusammensetzung nach Anspruch 5 oder 6, wobei das Copolymer von Butadien und vinylaromatischem Monomer mehrheitlich in der Kettenmitte funktionalisiert ist.

**8.** Zusammensetzung nach einem der vorhergehenden Ansprüche, wobei der Gehalt des Kohlenwasserstoffharzes im Bereich von 55 bis 120 phe, vorzugsweise von 60 bis 115 phe, liegt.

**9.** Zusammensetzung nach einem der vorhergehenden Ansprüche, wobei das Harz einen Gehalt an aromatischen Kohlenwasserstoffen in einem Bereich von 15 bis 40 % aufweist.

**10.** Zusammensetzung nach einem der vorhergehenden Ansprüche, wobei das Harz einen Gehalt an Hydroxylfunktionen zwischen 0 und 160 mg KOH/g, vorzugsweise in einem Bereich von 1 bis 50 mg/g, vorzugsweise von 5 bis 30 mg KOH/g, aufweist.

**11.** Zusammensetzung nach einem der vorhergehenden Ansprüche, wobei das Harz einen Gehalt an ethylenischen Protonen von weniger als 1 %, vorzugsweise weniger als 0,5 %, aufweist.

12. Zusammensetzung nach einem der vorhergehenden Ansprüche, wobei das Kohlenwasserstoffharz ein Mn von mehr als 600 g/mol, vorzugsweise mehr als 800 g/mol, aufweist.

13. Zusammensetzung nach einem der vorhergehenden Ansprüche, wobei das Kohlenwasserstoffharz einen Polymolekularitätsindex (PMI) von weniger als 1,7, vorzugsweise weniger als 1,6, aufweist.

14. Zusammensetzung nach einem der vorhergehenden Ansprüche, wobei der verstärkende Füllstoff aus der Gruppe bestehend aus Kieselsäuren, Rußen und Mischungen davon ausgewählt ist.

15. Reifen, umfassend eine Zusammensetzung nach einem der Ansprüche 1 bis 14.

**Claims**

1. Rubber composition based on at least:

   - from 50 to 100 phr of one or more diene elastomers, referred to as very low glass transition temperature (Tg) diene elastomers, having a Tg within a range of from -110°C to -70°C, selected from butadiene homopolymers, copolymers of butadiene and of a vinylaromatic monomer, having a content of vinylaromatic units of between 0 and 5% by weight, and mixtures thereof,
   - a reinforcing filler,
   - a crosslinking system,
   - from 50 to 150 phr of at least one hydrocarbon resin predominantly composed of units derived from terpene and phenol monomers, the resin having a content of aromatic protons of greater than 15%.

2. Composition according to Claim 1, wherein said very low Tg diene elastomer is present at a total content of from 75 to 100 phr, preferably of 100 phr.

3. Composition according to either one of the preceding claims, wherein said very low Tg diene elastomer has a Tg within a range of from -100°C to -80°C, preferably from -95°C to -80°C.

4. Composition according to any one of the preceding claims, wherein said very low Tg diene elastomer comprises a copolymer of butadiene and of a vinylaromatic monomer, preferably styrene, having a content of vinylaromatic units of between 0 and 5% by weight, preferably from 1% to 4% by weight, and also a content of vinyl units relative to the diene portion ranging from 8% to 15% by weight, preferably ranging from 10% to 15% by weight, relative to the total weight of the diene elastomer.

5. Composition according to Claim 4, wherein at least 70% by weight of said copolymer of butadiene and of a vinylaromatic monomer is functionalized.

6. Composition according to Claim 5, wherein said copolymer of butadiene and of a vinylaromatic monomer is functionalized with an alkoxysilane group, optionally partially or completely hydrolysed to give silanol, the alkoxysilane group optionally bearing another function capable of interacting with a reinforcing filler, the alkoxysilane group being bonded to the diene elastomer by means of the silicon atom.

7. Composition according to either one of Claims 5 and 6, wherein said copolymer of butadiene and of a vinylaromatic monomer is functionalized predominantly in the middle of the chain.

8. Composition according to any one of the preceding claims, wherein the content of said hydrocarbon resin is within a range of from 55 to 120 phr, preferably from 60 to 115 phr.

9. Composition according to any one of the preceding claims, wherein the resin has a content of aromatic protons within a range of from 15% to 40%.

10. Composition according to any one of the preceding claims, wherein the resin has a content of hydroxyl functions of between 0 and 160 mg of KOH/g, preferably within a range of from 1 to 50 mg/g, preferably from 5 to 30 mg of KOH/g.

11. Composition according to any one of the preceding claims, wherein the resin has a content of ethylenic protons of

less than 1%, preferably less than 0.5%.

**12.** Composition according to any one of the preceding claims, wherein said hydrocarbon resin has an Mn of greater than 600 g/mol, preferably greater than 800 g/mol.

**13.** Composition according to any one of the preceding claims, wherein said hydrocarbon resin has a polydispersity index (PDI) of less than 1.7, preferably less than 1.6.

**14.** Composition according to any one of the preceding claims, wherein the reinforcing filler is selected from the group consisting of silicas, carbon blacks, and mixtures thereof.

**15.** Tyre comprising a composition according to any one of Claims 1 to 14.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2016109476 A
- WO 2015043902 A
- WO 9736724 A
- WO 9916600 A
- WO 2006069792 A
- WO 2006069793 A
- WO 2008003434 A
- WO 2008003435 A
- EP 0735088 A
- WO 0316837 A
- WO 03002648 A
- US 2005016651 A
- WO 03002649 A
- US 2005016650 A
- WO 02083782 A
- US 2004132880 A
- WO 0230939 A
- US 6774255 B
- WO 0231041 A
- US 2004051210 A
- WO 2006125532 A
- WO 2006125533 A
- WO 2006125534 A
- WO 2010144890 A
- EP 0501227 A
- EP 0810258 A
- WO 0005300 A
- WO 0005301 A